(19) Europäisches Patentamt
European Patent Office
Office européen des brevets

(11) Publication number: **0 060 944**
**B1**

(12) # EUROPEAN PATENT SPECIFICATION


(45) Date of publication of patent specification: **05.03.86**

(51) Int. Cl.$^4$: **G 01 N 27/46,** G 01 N 33/22, H 01 M 8/14

(21) Application number: **81301220.0**

(22) Date of filing: **23.03.81**


(54) **Sensor for oxygen-combustibles gas mixtures.**


(43) Date of publication of application:
**29.09.82 Bulletin 82/39**

(45) Publication of the grant of the patent:
**05.03.86 Bulletin 86/10**

(84) Designated Contracting States:
**BE DE FR GB IT LU NL**



(56) References cited:
**US-A-3 860 498**
**US-A-4 009 321**
**US-A-4 079 171**
**US-A-4 160 067**
**US-E-28 792**



(73) Proprietor: **WESTINGHOUSE ELECTRIC CORPORATION**
**Westinghouse Building Gateway Center**
**Pittsburgh Pennsylvania 15222 (US)**

(72) Inventor: **Isenberg, Arnold Otto**
**327 Woodside Road**
**Pittsburgh Pennsylvania (US)**

(74) Representative: **van Berlyn, Ronald Gilbert**
**23, Centre Heights**
**London, NW3 6JG (GB)**


**EP 0 060 944 B1**


Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Description

This invention relates generally to gas sensors for measurement of gas compositions in gaseous mixtures; more particularly, it relates to a sensor for the quantitative measurement of oxygen in the presence of combustibles, such as hydrogen of carbon monoxide.

Traditional gas analysis methods, such as gas chromotography, can be used for such a purpose, but gas chromotography methods require gas sampling and do not provide the in-situ type of analysis that allows fast control of firing conditions to prevent possible hazard. Thus, it is prefered to use an in-situ probe-type sensor for monitoring these potentially hazardous or explosive conditions.

Conventional electrochemical-potential measurements of commercially available probe-type solid electrolyte sensors are undesirable for this gas measuring application in that such devices operate at temperatures, i.e. 800—1200°C, at which undesirable reactions occur between the oxygen and fuel constituents of a gas mixture, thereby rendering any measurements inaccurate.

In U.S.—A—3,860,498 an oxygen sensor apparatus is illustrated which is designed to measure the oxygen content of a gas mixture comprising oxygen and carbon dioxide and, possibly, also water vapour and which comprises the features stated in the precharacterising portion of Claim 1. U.S.—A—4,160,067 shows a molten carbonate electrolyte as part of a fuel cell.

There is disclosed herein with reference to the accompanying drawings an oxygen sensor apparatus which obviates certain disadvantages of prior art gas sensors; the apparatus disclosed herein separates oxygen and combustibles at a relatively low temperature and allows the measurement of the separated components without encountering undesirable reactions. The apparatus according to the invention is defined in Claim 1.

The successful operation of the apparatus requires the presence of carbon dioxide or carbon dioxide and water vapor in the gas mixture. The apparatus comprises a molten carbonate electrochemical cell that operates at a temperature of approximately 450°C to 700°C to separate oxygen from the combustibles constituents of the gas mixture and produce a cell current indicative of the oxygen content of the gas mixture. The gross combustibles content of the gas mixture is then measured.

The invention will become more readily apparent from the following exemplary description when read in conjunction with the accompanying drawings wherein:

Figure 1 is a sectional pictorial illustration of an embodiment of the invention; and

Figure 2 is a sectional pictoral illustration of an alternative embodiment of the invention.

Referring to Fig. 1 there is illustrated in section a gas-constituent-separating and measuring device 10. The typical embodiment of the device 10 as shown in Figure 1 consists of a tubular enclosure 12 consisting of a tubular molten carbonate electrochemical cell 20 and a tubular oxygen ion conductive solid electrolyte electrochemical cell 40 secured in an end-to-end relationship by a sealing member 50. A gas diffusion limiting adapter, or orifice plate 60 is positioned at one end of the tubular enclosure 12 to accommodate the diffusion of the constituents, i.e., $CO_2$, $O_2$, $H_2$, CO, etc. from an oxygen/combustibles gas environment G through the aperture 62 into the internal volume V of the tubular enclosure 12. The opposite end of the tubular enclosure 12 is closed by the end plate 64. The molten-carbonate electrochemical cell 20 consists of a molten carbonate electrolyte 22 and electrodes 24 and 26 disposed on opposite surfaces thereof. The oxygen ion conductive solid electrolyte electrochemical cell 40 consists of an oxygen ion conductive solid electrolyte member 42 and electrodes 44 and 46 disposed on opposite surfaces thereof. The seal 50 is of a material suitable for withstanding the mechanical vibration and temperature of operation of the device 10.

The molten carbonate electrochemical cell 20 is operated at a temperature in a range between approximately 400°C and 700°C which is maintained by the furnace 30 within which the cell 20 is positioned. The oxygen ion conductivity operation of the cell 40, necessitates an operating temperature between 700°C and 1200°C, which is established and maintained by the furnace 48 within which the cell 40 is positioned. The cell 40 typically consists of a solid electrolyte material consisting of stabilized zirconia, and electrodes 44 and 46 of platinum. The composition and operation of the oxygen ion conductive cell 40 is well known in the art, and is typically described and illustrated in United States reissue patent 28,792 which is assigned to the assignee of the present invention and incorporated herein by reference.

The molten carbonate electrolyte 22 of the cell 20 consists of a eutectic carbonate mixture impregnated in a porous mechanical support of a suitable non-reactive ceramic, such as lithium aluminate. Suitable eutectic carbonate mixtures include mixtures of $Li_2CO_3$, $K_2CO_3$, $Na_2CO_3$ and $Cs_2CO_3$ which melt at temperatures below 500°C and exhibit high $CO_3^{=}$ conductivity. The electrodes 24 and 26 are non-catalytic electrodes constructed of noble metals or conducting oxides such as lithiated nickel oxide or silver, copper oxide or magnetite.

The constituents of the monitored gas environment G, which is assumed to include $CO_2$, or a combination of $CO_2$ and water vapor, in excess of $O_2$, and constituents such as CO and $H_2$, as would typically be present in a combustion process, enter initially that portion of the volume V within the molten carbonate electrochemical cell 20. Under the influence of a voltage of up to 1.5 volts of the polarity indicated applied to the electrodes 24 and 26 of the molten carbonate cell 20 by the

voltage source 32, the total oxygen content in the gas mixture present within the tubular cell 20 is transported through the molten carbonate electrolyte 22 by an equivalent amount of $CO_2$ in accordance with the following reaction at the cathode electrode 24:

$$2\ CO_2 + O_2 + 4e^- \rightarrow 2\ CO_3^= \quad (1)$$

and oxygen will be released at the anode electrode 26 by the reaction:

$$2\ CO_3^= - 4e \rightarrow O_2 + 2\ CO_2 \quad (2)$$

A current-measuring circuit 34 connected to the electrodes 24 and 26 measures the current developed by the molten carbonate cell 20 in response to the transfer of oxygen by the carbon dioxide via carbonate ions as an indication of the oxygen concentration in the monitored gas environment G.

In the event water vapor is present in the gas mixture and hydroxides accumulate in the molten carbonate electrolyte 22, hydroxide carbonate mixtures can develop as the water vapor can transfer oxygen through the electrolyte via hydroxyl ions.

The molten carbonate electrolyte 22 effectively supports the transfer of $O_2$ with $CO_2$ from the internal volume in response to the applied potential from the voltage source 32 at operating temperatures of between approximately 400 and 700°C as controlled by the furnace 30. This low temperature of operation of the molten carbonate cell 20 avoids the possibility of initiating a chemical reaction between the fuel and oxygen constituents of the monitored gas environment entering the device 10 prior to the removal or separation of the oxygen constituent from the gas mixture entering the device 10 through the aperture 62. The combustibles constituent(s), i.e. $H_2$, is then transported to the portion of the internal volume V of the device 10 enclosed by the oxygen ion conductive solid electrolyte cell 40. A voltage source 70 is connected across the electrodes 44 and 46 to maintain a flow of oxygen from an external oxygen source, such as air, through the solid electrolyte member 42 into the volume enclosed by the cell 40 to combustively react with the fuel constituent in the presence of a catalytic electrode 44, which is typically platinum, atuthe operating temperature of the cell 40 which is typically in excess of 800°C. The cell current generated by the transport of the oxygen ions is measured by the current measuring circuit 72 as an indication of the gross combustibles content of the monitored gas environment G.

While the voltage source 70 provides a means for maintaining a steady applied potential, the self-generated EMF of the cell 40 resulting from the oxygen differential partial pressure across the electrolyte 42 can be employed to effect the desired transfer of oxygen to combustibly react with the fuel constituents of the gas mixture at the catalytic electrode 44.

It is apparent that the device 10 of Figure 1 can consist solely of the molten carbonate cell 20 if only an oxygen measurement is required.

As an alternative, an EMF measuring circuit can be connected across the electrodes 44 and 46 of the cell 40, as described in the above-identified U.S. reissue patent, to provide an oxygen measurement in accordance with the well-known Nernst equation, assuming a known or steady oxygen reference, such as air, at the electrode 46. This well-known technique for providing an oxygen measurement can indirectly provide a measure of the concentration of combustibles inasmuch as the low temperature oxygen concentration measured by the molten carbonate cell 20 will differ from that measured by the high temperature operation solid electrolyte cell 40 by the amount of oxygen that is consumed by the presence of combustibles at the elevated operating temperature of the cell 40.

An optional gas diffusion aperture element, or orifice plate, 78 can be employed between the internal volumes of the device 10 defined by the cells 20 and 40 to provide a range selection control by limiting the amount of gas entering the cell 40.

Referring to Figure 2, there is illustrated in a sectioned schematic form an alternative embodiment which eliminates the need for the high temperature oxygen ion conductive electrochemical cell 40 of Figure 1 and employs two molten carbonate electrochemical cells 80 and 90 which share a single furnace 99 which maintains the two cells at a common operating temperature of between 400°C and 700°C. The configuration of Figure 2 eliminates the separate heating levels of the embodiment of Figure 1 and further eliminates the need for the sealing means 50. In the implementation of the device 10 of Figure 2 the oxygen and combustibles content of the gas mixture are measured by the dual molten carbonate cell combination of cells 80 and 90 which may consist of separate electrolytes or share a single common molten carbonate electrolyte 88. The gas mixture passing through the aperture 62 of the gas diffusion limiting adapter 60 first enters the internal volume defined by the tubular molten carbonate electrochemical cell 80. As described above with reference to the operation of the molten carbonate cell 20 of Figure 1, the cell 80 responds to the applied potential from source 83 to the non-catalytic electrodes 82 and 84 by transporting $CO_2$ and a corresponding amount of $O_2$ from the internal volume through the electrolyte 88 in accordance with equation (1) above. The current developed by the cell 80, and measured by the current measuring circuit 85 is a measurement of the oxygen concentration of the gas mixture diffusing through the aperture 62. The non-catalytic electrodes 82 and 84 of the cell 80 may be constructed from copper, nickel, cobalt, silver, gold and electronically conducting metal oxides except the oxides of the platinum group elements.

The combustibles constituent(s) remaining following the removal of the oxygen by the operation of the cell 80 enter the internal volume defined by the molten carbonate cell 90. The electrodes 92 and 94 are catalytic electrodes, i.e., typically platinum. The oxygen reference environment of cell 40 of Figure 1 is replaced by an external gas mixture of $O_2$ and $CO_2$ surrounding the cell 90 and in contact with the electrode 94. An electrical potential as shown is applied across electrodes 94 and 92 by the voltage source 95 to produce a transport of $CO_2$ and an equivalent amount of $O_2$ through the molten carbonate electrolyte 88 to the internal volume of the device 10 defined by the cell 90. The introduction of oxygen to this internal volume to contact the combustible content present at the surface of the catalytic electrode 92 results in the electrochemical combustion of the combustible constituents or fuel constituent(s) within the volume of the cell 90. The current produced by the cell 90, as measured by the current measurement circuit 97 is an indication of the gross combustibles content of the gas mixture entering the diffusion orifice 62.

As discussed above with reference to the voltage source 70 of Figure 1, the voltage source 95 can be eliminated and the self-generated EMF of the cell 90 employed to transfer $O_2$ to combustibly react with the fuel constituents of the catalytic electrode 92.

As discussed above with reference to the embodiment of Figure 1, an optional gas diffusion limiting aperture adapter 100 can be inserted to partition the internal volumes defined by the cells 80 and 90, respectively, to provide capability of range selection by limiting the fuel constituent gas mixture entering the volume defined by the cell 90.

**Claims**

1. An oxygen sensor apparatus for measuring the oxygen content of a gas mixture comprising oxygen and combustible gases wherein said gas mixture includes carbon dioxide, or the combination of carbon dioxide and water vapor besides oxygen and combustible gases, the apparatus comprising:

a first electrochemical cell (20; 28) disposed in use in the gas mixture to be monitored, said cell being comprised of an electrolyte wall (22; 88) defining a first plenum, and first and second electrodes (24, 26; 82, 84) disposed on and contacting opposite surfaces of said electrolyte wall;

means (60, 62) for admitting the gas mixture to said first plenum for contact with the first electrode on the inside surface of said first plenum;

means for transporting oxygen from said gas mixture through said electrolyte wall to the outside of said first plenum to deplete the oxygen present in said gas mixture, said means comprising a first voltage source (32; 83) connected across said first and second electrodes;

means (34; 85) for measuring the current through said first electrochemical cell, which current results from the transport of oxygen to the outside of the first plenum,

a second electrochemical cell (40; 90) having an electrolyte wall (42; 88) defining a second plenum, and third and fourth electrodes (44, 46; 92, 94) disposed on and contacting opposite surfaces thereof; the second plenum being arranged to receive the gas mixture devoid of oxygen from the first plenum, whereby this mixture is brought into contact with the third electrode (44; 92) on the inside surface of said second plenum;

means for transporting oxygen through the electrolyte wall (42; 88) of the second electrochemical cell (40; 90), said means including a second voltage source (70; 95) connected across the third and fourth electrodes; and

means (72) for measuring the current through said second electrochemical cell (40; 90), the apparatus being characterized in that

the electrolyte wall (22; 88) of the first electrochemical cell (20; 80) consists of a molten-carbonate-electrolyte consisting of a eutectic carbonate mixture impregnated in a porous support, the oxygen transported through this electrolyte wall being incorporated in carbonate ions formed at the first electrode (24; 82) by a reaction between the oxygen and the carbon dioxide contained in the gas mixture admitted to the first plenum;

the first electrode (24; 82) is of a non-catalytic material whereas the third electrode (44; 92) consists of a catalytic material;

the fourth electrode (46; 94) on the outside surface of said second plenum is exposed to an external oxygen gas environment;

the third and fourth electrodes (44, 46; 92, 94) are polarized by the second voltage source (70; 95) so as to transport oxygen from the external oxygen gas environment into the second plenum for reaction with any combustible gas constituents of the gas mixture in the second plenum, the current resulting from the transport of oxygen into the second plenum being representative of the content of combustible gas constituents in said mixture.

2. A sensor apparatus as claimed in claim 1 further including means (30, 99) for heating said first electrochemical cell (20, 80) to a temperature within a predetermined range to enhance the conductivity of said molten carbonate while limiting said temperature to a level less than that at which a combustible reaction would occur between the oxygen and combustible gas constituents of said gas mixture.

3. A sensor apparatus as claimed in claim 1 wherein said eutectic carbonate mixture contained in said molten carbonate electrolyte wall is a mixture selected from the following: $Li_2CO_3$, $Na_2CO_3$, and $Cs_2CO_3$.

4. A sensor apparatus as claimed in claim 1

wherein said porous support is of non-reactive ceramic material consisting of lithium aluminate.

5. A sensor apparatus as claimed in claim 2 wherein said means (30, 99) for heating maintains said molten carbonate electrolyte wall of said first electrochemical cell (20, 80) at a temperature approximately between 400 and 700°C.

6. A sensor apparatus as claimed in claim 1 wherein the electrolyte wall of said second electrochemical cell (90) is a molten-carbonate-electrolyte consisting of a eutectic carbonate mixture impregnated in a porous support, said external oxygen gas environment contacting said fourth electrode (94) including $CO_2$, said second voltage source (95) causing transport of $CO_2$ and a corresponding amount of $O_2$ through said molten carbonate electrochemical cell to said third electrode (92).

7. A sensor apparatus as claimed in claim 6 wherein said eutectic carbonate mixture comprised in said molten carbonate electrolyte is a mixture selected from the following: $Li_2CO_3$, $K_2CO_3$, $Na_2CO_3$, and $Cs_2CO_3$.

8. A sensor apparatus as claimed in claim 6 wherein said porous support is a non-reactive ceramic unit consisting of lithium aluminate.

9. A sensor apparatus as claimed in claim 1 wherein said second electrochemical cell (40) is an oxygen ion conductive solid electrolyte electrochemical cell, said second voltage source (70) connected across the electrodes of said second electrochemical cell pumping oxygen from said oxygen gas environment to said third electrode (44).

10. A sensor apparatus as claimed in claim 9 further including means for heating said first electrochemical cell (20) to a temperature approximately between 400 to 700°C and heating said second electrochemical cell (40) to a temperature of approximately 800°C or higher.

**Revendications**

1. Capteur d'oxygène pour mesurer la teneur en oxygène dans un mélange gazeux contenant de l'oxygène et des gaz combustibles, le mélange gazeux contenant du gaz carbonique ou la combinaison de gaz carbonique et de vapeur d'eau en plus de l'oxygène et des gaz combustibles, appareil comprenant une première cellule électrochimique (20, 28) mise en oeuvre dans le mélange gazeux à contrôler, la cellule étant formée d'une paroi en électrolyte (22, 88) définissant un premier volume et une première et une seconde électrode (24, 26; 82, 84) placées sur les surfaces opposées de la paroi en électrolyte et en contact avec cette paroi, un moyen (60, 62) pour admettre le mélange gazeux dans le premier volume pour venir en contact avec la première électrode sur la surface intérieure de ce premier volume, un moyen pour transférer l'oxygène du mélange gazeux à travers la paroi en électrolyte vers l'extérieur du premier volume pour appauvrir le mélange gazeux en oxygène, ce moyen se composant d'une première source de tension (32, 83) branchée entre la première et la seconde électrode, un moyen (34, 85) pour mesurer le courant traversant la première cellule électrochimique, ce courant résultant du transfert de l'oxygène vers l'extérieur du premier volume, et une seconde cellule électrochimique (40, 90) ayant une paroi en électrolyte (42, 88) définissant un second volume et une troisième et une quatrième électrode (44, 46; 92, 94) prévues sur les surfaces opposées de cette paroi et en contact celle-ci, le second volume recevant le mélange gazeux sans oxygène du premier volume, le mélange étant mis en contact avec la première électrode (44, 92) sur la surfce intérieure du second volume, un moyen pour transférer l'oxygène à travers la cloison en électrolyte (42, 88) de la seconde cellule électrochimique (40, 90), ce moyen étant constitué par une seconde source de tension (70, 95) branchée entre la troisième et quatrième électrode et un moyen (72) pour mesurer le courant traversant la seconde cellule électrochimique (40, 90), capteur caractérisé en ce que la paroi en électrolyte (22, 88) de la première cellule électrochimique (20, 80) est un électrolyte à base de carbonate fondu composé d'un mélange eutectique de carbonates imprégnés dans un support poreux, l'oxygène transféré à travers cette paroi en électrolyte étant incorporé dans les ions carbonates formés au niveau de la première électrode (24, 82) par une réaction entre l'oxygène et le gaz carbonique contenus dans le mélange gazeux reçu dans le premier volume, la première électrode (24, 82) étant en un matériau non catalyseur alors que la troisième électrode (44, 92) est en un matériau catalyseur, la quatrième électrode (46, 94) sur la surface extérieure du second volume étant exposée à un environnement externe d'oxygène gazeux, la troisième et la quatrième électrode (44, 46, 92, 94) étant polarisées par la second source de tension (70, 95) de façon à transférer l'oxygène de l'environnement externe d'oxygène gazeux dans le second volume pour réagir avec tous les constituants gazeux combustibles du mélange gazeux du second volume, le courant résultant du transfert de l'oxygène dans le second volume représentant la teneur en constituants gazeux combustibles du mélange.

2. Capteur selon la revendication 1, caractérisé en ce qu'il comporte en outre un moyen (30, 99) pour chauffer la première cellule électrochimique (20, 80) à une température comprise entre une plage prédéterminée pour augmenter la conductibilité du carbonate fondu tout en limitant cette température à un niveau inférieur à celui auquel se produira la réaction de combustion entre l'oxygène et les constituants gazeux combustibles du mélange gazeux.

3. Capteur selon la revendication 1, caractérisé en ce que le mélange eutectique de carbonates contenus dans la paroi électrolytique de carbonate fondu est un mélange choisi dans le groupe formé par $Li_2CO_3$, $Na_2CO_3$, et $Cs_2CO_3$.

4. Capteur selon la revendication 1, caractérisé en ce que le support poreux est une céramique

non réactive constituée par de l'aluminate de lithium.

5. Capteur selon la revendication 2, caractérisé en ce que le moyen (30, 99) de chauffage maintient la paroi d'électrolyte en carbonate fondu de la première cellule électrochimique (20, 80) à une température comprise approximativement entre 400 et 700°C.

6. Capteur selon la revendication 1, caractérisé en ce que la paroi d'électrolyte de la seconde cellule électrochimique (90) est de l'électrolyte de carbonate fondu composé d'un mélange eutectique de carbonates imprégnés dans un support poreux, l'environnement externe d'oxygène gazeux touchant la quatrième électrode (94) contenant $CO_2$, cette seconde source de tension (95) assurant le transfert du gaz carbonique $CO_2$ et d'une quantité correspondante d'oxygène $O_2$ à travers la cellule électrochimique de carbonate fondu vers la troisième électrode (92).

7. Capteur selon la revendication 6, caractérisé en ce que le mélange eutectique de carbonates de l'électrolyte de carbonate fondu est un mélange choisi dans le groupe formé par $Li_2CO_3$, $K_2CO_3$, $Na_2CO_3$ et $Cs_2CO_3$.

8. Capteur selon la revendication 6, caractérisé en ce que le support poreux est un élément en céramique non réactive formé d'aluminate de lithium.

9. Capteur selon la revendication 1, caractérisé en ce que la seconde cellule électrochimique (40) est une cellule électrochimique à électrolyte solide conducteur à ions d'oxygène, la second source de tension (70) branchée entre les électrodes de cette seconde cellule électrochimique pompant l'oxygène de l'environnement d'oxygène gazeux vers la troisième èlectrode (44).

10. Capteur selon la revendication 9, caractérisé en ce qu'il comprend un moyen pour chauffer la première cellule électrochimique (20) à une température comprise approximativement entre 400 et 700°C et chauffer la seconde cellule électrochimique (40) à une température approximativement égale à 800°C ou plus.

**Patentansprüche**

1. Sauerstoffsensor zum Messen des Sauerstoffgehalts eines Gasgemisches aus Sauerstoff und Brenngasen, das neben Sauerstoff und Brenngasen Kohlendioxid oder die Kombination aus Kohlendioxid und Wasserdampf enthält, wobei der Sensor folgende Bauteile aufweist:

eine erste elektrochemische Zelle (20; 80), die bei Gebrauch in das zu überwachende Gasgemisch eingesetzt ist und aus einer Elektrolytwand (22; 88) besteht, die eine erste Kammer begrenzt, deren gegenüberliegende Seiten durch eine erste bzw. eine zweite Elektrode (24, 26; 82, 84) berührt werden;

Mittel (60, 62) für den Einlass des Gasgemisches in die erste Kammer, wo diese Gasgemisch mit der ersten Elektrode an der Innenseite der ersten Kammer in Kontakt kommt;

Mittel zum Transport von Sauerstoff aus dem Gasgemisch durch die Elektrolytwand zu der Aussenseite der ersten Kammer, um den im Gasgemisch enthaltenen Sauerstoff zu entziehen, wobei das Mittel aus einer ersten Spannungsquelle (32; 83) besteht, die parallel zur ersten und zweiten Elektrode geschaltet ist;

Mittel (34; 85) zum Messen des durch die erste elektrochemische Zelle fliessenden beim Sauerstofftransport zue Aussenseite der ersten Kammer erzeugten Stromes;

eine zweite elektrochemische Zelle (40; 90) mit einer Elektrolytwand (45; 88), die eine zweite Kammer begrenzt, deren gegenüberliegende Seiten durch eine dritte bzw. vierte Elektrode (44, 46; 92, 94) berührt werden, wobei die zweite Kammer so ausgelegt ist, dass sie das von Sauerstoff befreite Gasgemisch aus der ersten Kammer aufnimmt, und dieses Gemisch mit der dritten Elektrode (44, 92) an der Innenseite der zweiten Kammer in Kontakt kommt;

Mittel zum Transport des Sauerstoffs durch die Elektrolytwand (42; 88) der zweiten elektrochemischen Zelle (40; 90), mit einer zweiten, parallel zur dritten und vierten Elektrode geschalteten Spannungsquelle (70; 95) und

Mittel (72) zum Messen des Stromflusses durch die zweite elektrochemische Zelle (40; 90), wobei der Sensor dadurch gekennzeichnet ist, dass die Elektrolytwand (22, 88) der ersten elektrochemischen Zelle (20; 80) ein geschmolzener Carbonat-Elektrolyte ist, der aus einer porösen, mit einem eutektischen Carbonatgemisch imprägnierten Unterlage besteht, der durch diese Elektrolytwand transportierte Sauerstoff in Carbonationen eingebettet wird, die an der ersten Elektrode (24; 82) durch eine Reaktion zwischen dem in die erste Kammer gelangten Gasgemisch enthaltenen Sauerstoff und dem Kohlendioxid gebildet sind;

die erste Elektrode (24, 82) aus einem nichtkatalytischen Material, während die dritte Elektrode (44; 94) aus einem katalytischen Material besteht;

die vierte Elektrode (46, 94) an der Aussenseite der zweiten Kammer einer äusseren Sauerstoffatmosphäre ausgesetzt ist;

die dritte und vierte Elektrode (44, 46; 92, 94) durch die zweite Spannungsquelle (70; 95) polarisiert ist, derart, dass der aus der äusseren Sauerstoff-atmosphäre in die zweite Kammer transportierte Sauerstoff mit den Brenngasbestandteilen des Gasgemisches in der zweiten Kammer reagiert, wobei der beim Transport des Sauerstoffs in die zweite Kammer erzeugte Strom für den Gehalt von Brenngasbestandteilen im Gemisch repräsentativ ist.

2. Sensor nach Anspruch 1, dadurch gekennzeichnet, dass Mittel (30, 39) zum Erwärmen der ersten elektrochemischen Zelle (20, 80) auf einen vorbestimmten Temperaturbereich vorgesehen sind, um die Leitfähigkeit des geschmolzenen Carbonats zu erhöhen, wobei die obere Grenze dieses Temperaturbereichs unter der Temperatur liegt, bei der eine Zündreaktion zwischen dem

Saurestoff und den Brenngasbestandteilen des Gasgemisches auftritt.

3. Sensor nach Anspruch 1, dadurch gekennzeichnet, dass die Bestandteile des eutektischen Carbonatgemisches in der geschmolzenen Carbonat - Elektrolytwand aus den Verbindungen $Li_2CO_3$, $Na_2CO_3$ und $Cs_2CO_3$ ausgewählt.

4. Sensor nach Anspruch 1, dadurch gekennzeichnet, dass die poröse Unterlage aus einem nichtreaktionsfähigen keramischen Material aus Lithiumaluminat besteht.

5. Sensor nach Anspruch 2, dadurch gekennzeichnet, dass das Mittel (30, 99) zum Erwärmen die geschmolzene Carbonat - Elektrolytwand der ersten elektrochemischen Zelle (20, 80) auf einer Temperatur zwischen etwa 400 und 700°C hält.

6. Sensor nach Anspruch 1, dadurch gekennzeichnet, dass die Elektrolytwand der zweiten elektrochemischen Zelle (90) ein geschmolzener Carbonat-Elektrolyt aus einer porösen, mit einem eutektischen Carbonatgemisch imprägnierten Unterlage besteht, die äussere Sauerstoffgasatmosphäre die $CO_2$ - enthaltende vierte Elektrode (94) berührt, die zweite Spannungsquelle (95) den Transport von $CO_2$ und einer entsprechenden Menge $O_2$ dadurch die geschmolzene Carbonat - elektrochemische Zelle zur dritten Elektrode (92) bewirkt.

7. Sensor nach Anspruch 6, dadurch gekennzeichnet, dass die Bestandteile des eutektischen Carbonatgemisches aus $Li_2CO_3$, $K_2CO_3$, $Na_2CO_3$ und $Cs_2CO_3$ ausgewählt sind.

8. Sensor nach Anspruch 6, dadurch gekennzeichnet, dass die poröse Unterlage aus einem nichtreaktionsfähigen keramischen Material aus Lithiumaluminat besteht.

9. Sensor nach Anspruch 1, dadurch gekennzeichnet, dass die zweite elektrochemische Zelle (40) eine Sauerstoffionen leitfähige Festkörper - Elektrolyt - elektrochemische Zelle ist, die parallel zu den Elektroden der zweiten elektrochemischen Zelle geschaltete zweite Spannungsquelle Sauerstoff zu der dritten Elektrode (44) pumpt.

10. Sensor nach Anspruch 9, dadurch gekennzeichnet, dass ferner Mittel zum Erwärmen der ersten elektrochemischen Zelle (20) auf eine Temperatur zwischen etwa 400 und 700°C und zum Erwärmen der zweiten elektrochemischen Zelle (40) auf eine Temperatur von etwa 800°C oder höher vorgesehen sind.

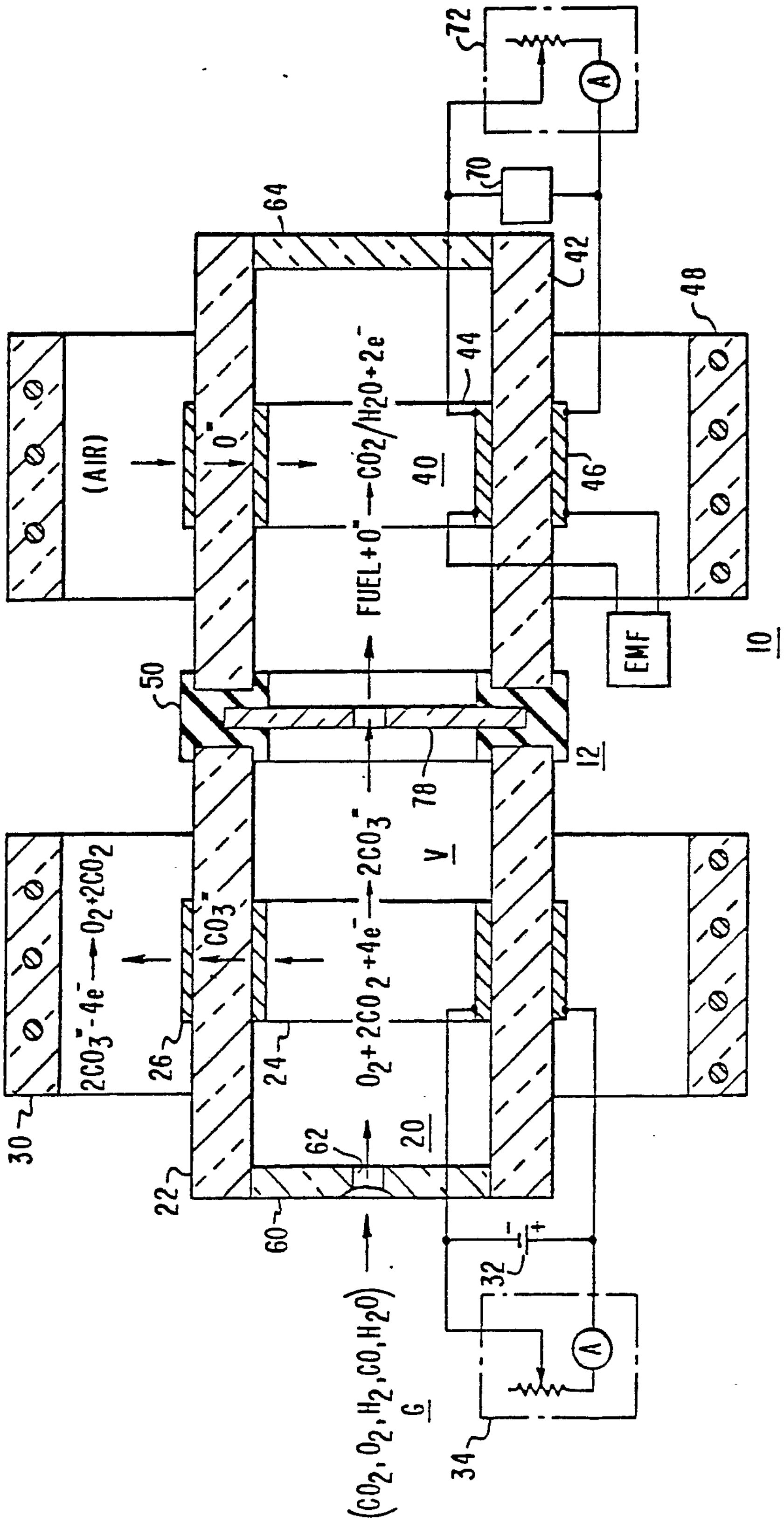
(AIR)
O=
FUEL + O= → CO2/H2O + 2e⁻
40
EMF
2CO3= - 4e⁻ → O2 + 2CO2
CO3=
O2 + 2CO2 + 4e⁻ → 2CO3=
V
20
(CO2, O2, O2, H2, CO, H2O)
G
A
A
10
12
22
24
26
30
32
34
42
44
46
48
50
60
62
64
70
72
78

FIG. 1

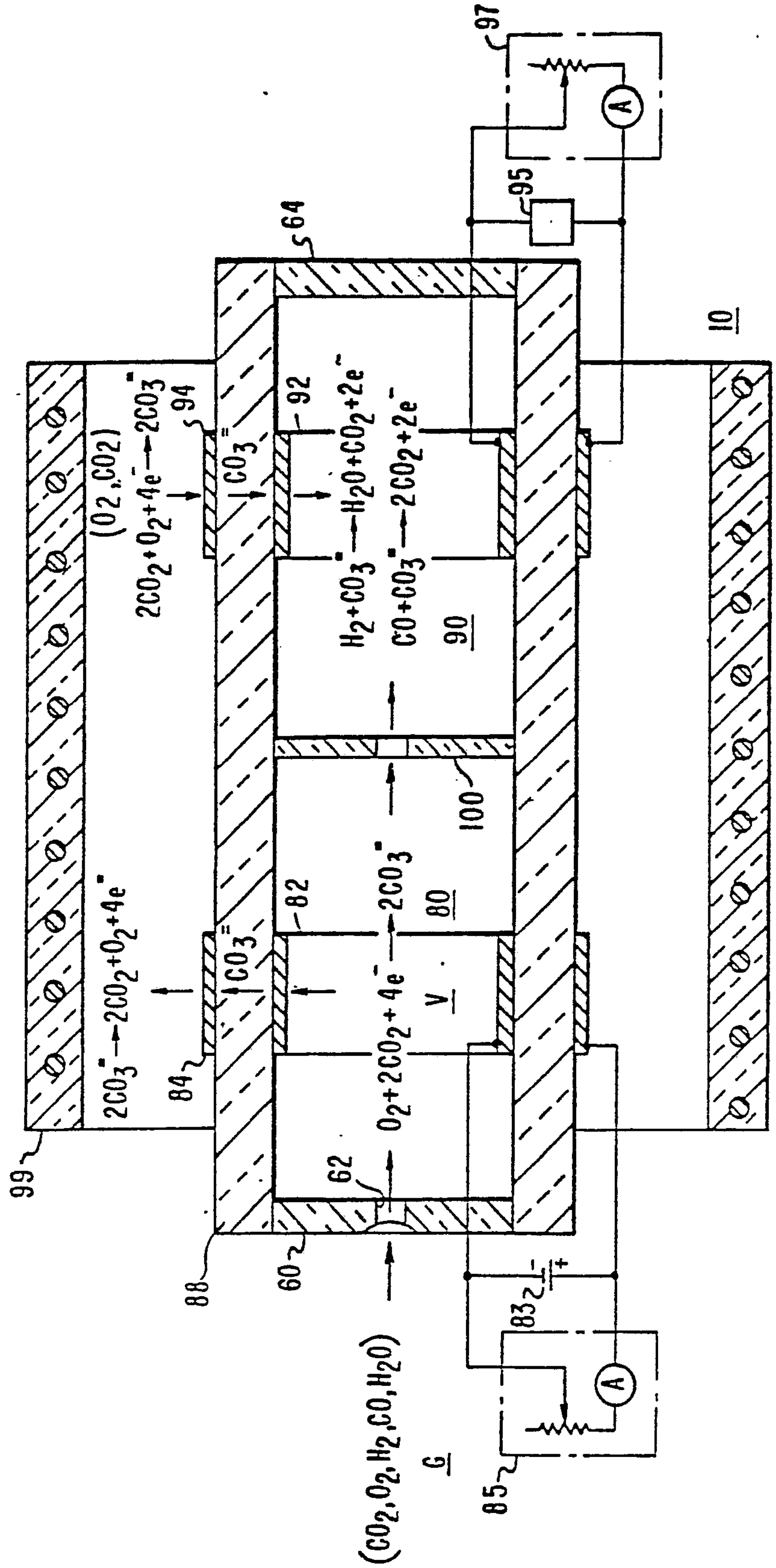
97
95
64
10
99
94
92
$(O_2, CO_2)$
$2CO_2+O_2+4e^- \rightarrow 2CO_3^=$
$CO_3^=$
$H_2+CO_3^= \rightarrow H_2O+CO_2+2e^-$
$CO+CO_3^= \rightarrow 2CO_2+2e^-$
90
100
82
84
$2CO_3^= \rightarrow 2CO_2+O_2+4e^-$
$O_2+2CO_2+4e^- \rightarrow 2CO_3^=$
80
V
62
88
60
83
85
A
$(CO_2, O_2, H_2, CO, H_2O)$
G

FIG.2